# EUROPEAN PATENT APPLICATION

(11) **EP 4 723 309 A1**
(43) Date of publication of application: **08.04.2026**
(21) Application number: 24814061.8
(22) Date of filing: 26.04.2024
(51) Int. Cl.: H01M 10/6568

(54) **COOLING PLATE, BATTERY PACK, AND ELECTRIC DEVICE**

(30) Priority: 29.05.2023 CN 202310623790; 29.05.2023 CN 202310618908
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: PAN, Fuli, Ningbo, Zhejiang 315899 (CN); LIAO, Dingyan, Ningbo, Zhejiang 315899 (CN); DUAN, Yanyan, Ningbo, Zhejiang 315899 (CN); YU, Jiang, Ningbo, Zhejiang 315899 (CN); ZHOU, Jinbo, Ningbo, Zhejiang 315899 (CN); MAO, Yun, Ningbo, Zhejiang 315899 (CN)
(74) Representative: Kraus & Lederer PartGmbB
(86) International application number: PCT/CN2024/090087
(87) International publication number: WO 2024/244855

(57) **Abstract**

A cooling plate (100), a battery pack (200), and an electric device (1000). The cooling plate (100) is provided with at least one flow channel (110); the flow channel (110) includes a first flow channel (111); the cross-sectional shape of the first flow channel (111) is non-circular. When the cooling plate (100) is subjected to external pressure, the cross-sectional shape of the first flow channel (111) changes so as to increase the volume of the first flow channel (111).

## Description

### PRIORITY INFORMATION

The present application claims priorities to and benefits of Chinese patent applications Nos. 202310623790.8 and 202310618908.8, filed with China National Intellectual Property Administration on May 29, 2023, the entire contents of which are incorporated herein by reference.

### FIELD

The present disclosure relates to the field of battery technologies, and more particularly, to a cooling plate, a battery pack, and an electric device.

### BACKGROUND

In electric devices such as an electric vehicle, batteries serve as an energy source for the electric devices to provide power for the electric devices. During charging or discharging of the battery, a battery cell of the battery tend to generate heat. To dissipate the heat from the battery, the battery is usually attached to a cooling plate. A cooling liquid can be introduced into a flow channel of the cooling plate to carry away the heat generated by the battery. However, during use, the battery cell gradually expands in volume and undergoes a permanent deformation, which therefore compresses the cooling plate, reducing a volume of the flow channel of the cooling plate. Consequently, an amount of the cooling liquid is decreased, lowering a cooling efficiency of the cooling plate.

### SUMMARY

The present disclosure provides a cooling plate, a battery pack, and an electric device.

A cooling plate according to embodiments of the present disclosure has at least one flow channel. The at least one flow channel includes a first flow channel. The first flow channel has a cross section in a non-circular shape. In the case that the cooling plate is subjected to an external pressure, the shape of the cross section of the first flow channel is changed to increase a volume of the first flow channel.

With the cooling plate according to the embodiments of the present disclosure, in the case that the cooling plate is subjected to the external pressure, the shape of the cross section of the first flow channel is changed to increase the volume of the first flow channel. As a result, a total cooling capacity within the cooling plate does not decrease, improving a cooling efficiency of the cooling plate.

In some embodiments, the cooling plate has a plurality of flow channels, and the plurality of flow channels includes a first flow channel and a second flow channel. In the case that the cooling plate is subjected to the external pressure, a volume of the second flow channel is decreased, and the volume of the first flow channel is increased, to keep a total volume of the plurality of flow channels substantially unchanged.

In the case that the cooling plate is subjected to the external pressure, the volume of the second flow channel is decreased, and the volume of the first flow channel is increased, to keep the total volume of the plurality of flow channels substantially unchanged. As a result, a cooling liquid within the cooling plate is prevented from overflowing and the total volume remains substantially unchanged, improving the cooling efficiency of the cooling plate.

In some embodiments, the shape of the cross section of the first flow channel is ellipse. In the case that the cooling plate is subjected to the external pressure, the shape of the cross section of the first flow channel is changed from ellipse to circle.

In some embodiments, the at least one flow channel in the cooling plate further includes a second flow channel; and in the case that the cooling plate is subjected to the external pressure, a shape of a cross section of the second flow channel is changed to keep a total volume of the at least one flow channel substantially unchanged.

In some embodiments, the shape of the cross section of the second flow channel is circle; and in the case that the cooling plate is subjected to the external pressure, the shape of the cross section of the second flow channel is changed from circle to non-circle.

In some embodiments, in the case that the cooling plate is subjected to the external pressure, the shape of the cross section of the second flow channel is changed from circle to ellipse.

In some embodiments, a plurality of first flow channels and a plurality of second flow channels are provided and alternately arranged.

In some embodiments, the cooling plate has a plurality of flow channels. Two adjacent flow channels of the plurality of flow channels are spaced apart from each other.

In some embodiments, a cavity is formed between the two adjacent flow channels; and/or a part of the cooling plate located between the two adjacent flow channels is of a solid structure.

In some embodiments, the first flow channel of the cooling plate and/or the second flow channel of the cooling plate have each a cross-section in a shape of polygon.

In some embodiments, the cross section of the first flow channel of the cooling plate is in a quadrilateral shape, and in the case that the cooling plate is subjected to the external pressure, a length difference between two adjacent sides of the quadrilateral shape is decreased.

In some embodiments, the cross section of the second flow channel of the cooling plate is in a quadrilateral shape, and in the case that the cooling plate is subjected to the external pressure, a length difference between two adjacent sides of the quadrilateral shape is increased.

In some embodiments, the cooling plate includes: an outer frame; and a plurality of partition plates disposed within the outer frame and arranged at intervals. The plurality of flow channels are defined by the plurality of partition plates and the outer frame. Two adjacent flow channels of the plurality of flow channels are spaced apart from each other.

In some embodiments, each of the plurality of partition plates is provided with a guide structure. The guide structure is configured to guide a deformation of the partition plate, enabling the volume of the second flow channel to be decreased and the volume of the first flow channel to be increased.

In some embodiments, the guide structure has at least one of: a recess formed at the partition plate; a bending structure disposed at the partition plate; or a bevel edge disposed at the partition plate.

A battery pack according to the embodiments of the present disclosure includes: the cooling plate described above; and a battery cell attached to the cooling plate.

In some embodiments, the battery cell is disposed at each of two opposite sides of the cooling plate.

An electric device according to the embodiments of the present disclosure includes the battery pack described above.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a schematic structural view of a cooling plate before being subjected to an external pressure according to an embodiment of the present disclosure.
FIG. 2 is a schematic structural view of a cooling plate after being deformed by an external pressure according to an embodiment of the present disclosure.
FIG. 3 is a schematic structural view illustrating a deformation process of a cooling plate subjected to an external pressure according to an embodiment of the present disclosure.
FIG. 4 is a schematic structural view of a battery pack according to an embodiment of the present disclosure.
FIG. 5 is a schematic structural view of a battery pack according to another embodiment of the present disclosure.
FIG. 6 is a schematic structural view of a cooling plate before being subjected to an external pressure according to another embodiment of the present disclosure.
FIG. 7 is a schematic structural view of a cooling plate after being deformed by an external pressure according to another embodiment of the present disclosure.
FIG. 8 is a schematic structural view illustrating a deformation process of a cooling plate subjected to an external pressure according to another embodiment of the present disclosure.
FIG. 9 is a schematic enlarged structural view of a cooling plate before being subjected to an external pressure according to an embodiment of the present disclosure.
FIG. 10 is a schematic structural view of a battery pack according to yet another embodiment of the present disclosure.
FIG. 11 is a schematic structural view of a battery pack according to still yet another embodiment of the present disclosure.
FIG. 12 is a schematic structural view of an electric device according to an embodiment of the present disclosure.

Description of reference numerals of main components:
electric device 1000, battery pack 200, battery cell 210, cooling plate 100, flow channel 110, first flow channel 111, second flow channel 112, outer frame 113, partition plate 114, gap channel 115, guide structure 116.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

In the description of the present disclosure, it should be understood that, the orientation or the position indicated by technical terms such as "center", "longitudinal", "transverse", "length", "width", "thickness", "over", "below", "front", "rear", "left", "right", "vertical", "horizontal", "top", "bottom", "inner", "outer", "clockwise", and "anti-clockwise" should be construed to refer to the orientation or the position as shown in the drawings, and is only for the convenience of describing the embodiments of the present disclosure and simplifying the description, rather than indicating or implying that the pointed device or element must have a specific orientation, or be constructed and operated in a specific orientation, and therefore cannot be understood as a limitation of the present disclosure. In addition, terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means at least two, unless otherwise specifically defined.

In the description of the present disclosure, it should be noted that, unless otherwise clearly specified and limited, terms such as "install", "connect", and "connect to" should be understood in a broad sense. For example, it may be a fixed connection or a detachable connection or connection as one piece; mechanical connection or electrical connection or mutual communication; direct connection or indirect connection through an intermediate; internal communication of two components or the interaction relationship between two components. For those of ordinary skill in the art, the specific meaning of the above-mentioned terms in the present disclosure can be understood according to specific circumstances.

In the present disclosure, unless expressly stipulated and defined otherwise, the first feature "on" or "under" the second feature may mean that the first feature is in direct contact with the second feature, or the first and second features are in indirect contact through another feature between them. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is lower than that of the second feature.

A number of embodiments or examples are provided in the disclosure of the present disclosure to implement different structures of the present disclosure. To simplify the disclosure of the present disclosure, components and arrangements of particular examples will be described below, which are, of course, examples only and are not intended to limit the present disclosure. Furthermore, reference numerals and/or reference letters may be repeated in different examples of the present disclosure. Such repetition is for the purpose of simplicity and clarity and does not indicate any relationship between various embodiments and/or arrangements in question. In addition, various examples of specific processes and materials are provided in the present disclosure. However, those of ordinary skill in the art may be aware of applications of other processes and/or the use of other materials.

### First Embodiment

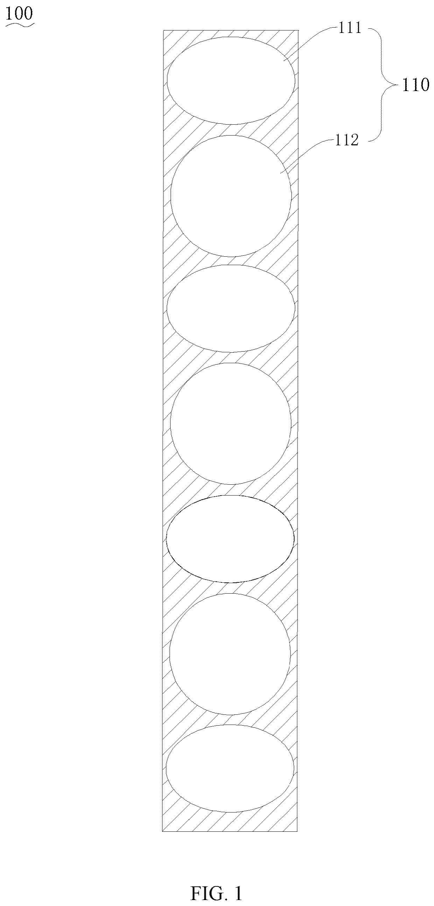

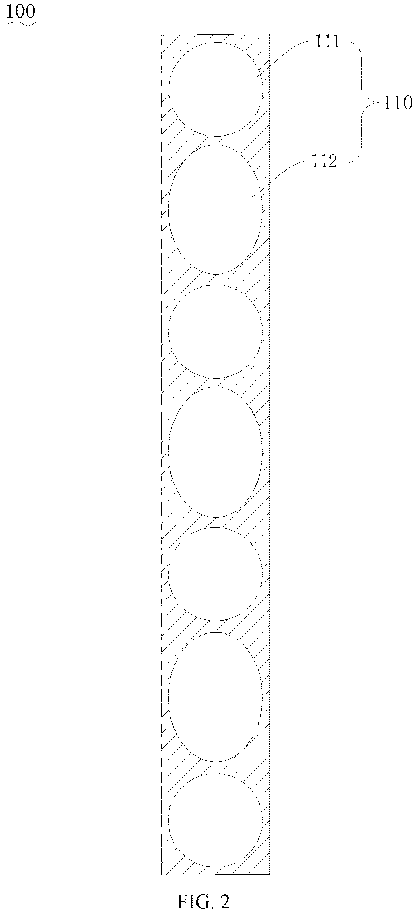

As illustrated in FIG. 1 to FIG. 3, a cooling plate 100 according to this embodiment of the present disclosure has at least one flow channel 110. The at least one flow channel 110 includes a first flow channel 111. The first flow channel 111 has a cross section in a non-circular shape. After the cooling plate 100 is subjected to an external pressure, the shape of the cross section of the first flow channel 111 is changed from the non-circle to a circle.

With the cooling plate 100 according to the embodiments of the present disclosure, after the cooling plate 100 is subjected to the external pressure, the shape of the cross section of the first flow channel 111 is changed from the non-circular to a nearly circular, and thus a cross-sectional area of the first flow channel 111 is increased while a length of the first flow channel 111 remains substantially unchanged, enabling a volume of the first flow channel 111 to be increased. As a result, a total amount of the cooling liquid within the cooling plate 100 does not decrease, improving a cooling efficiency of the cooling plate 100.

Specifically, the cooling plate 100 may be a device that exchanges heat through a cooling liquid. The cooling plate 100 can be configured to exchange heat with a device or an object that requires a temperature adjustment to reduce a temperature of the device or the object. For example, the cooling plate 100 can be configured to exchange heat with a battery cell 210 to lower a temperature of the battery cell 210. The cooling plate 100 may be configured as a plate-like structure having a predetermined thickness. For a traction battery of a new energy vehicle, the cooling plate 100 applicable in the traction battery has a thickness that may range from 15 mm to 35 mm. The cooling plate 100 may be made of a material having satisfactory thermal conductivity, e.g., a metallic material. For example, the cooling plate 100 may be made of an aluminum alloy and formed through processes such as extrusion.

The cooling liquid in the cooling plate 100 may be a substance having fluidity and facilitating heat conduction. The flow channel 110 of the cooling plate 100 may have a cylindrical hollow structure, through which the cooling liquid flows in and out. Heat exchange is performed via an outer surface of the cooling plate 100. One, two, or more flow channels 110 may be formed for the cooling liquid. When one flow channel 110 is formed for the cooling liquid, the one flow channel 110 is the first flow channel 111.

It may be understood that, after the shape of the cross section of the first flow channel 111 changes, a perimeter of the first flow channel 111 generally remains unchanged. Based on a principle that a circle has a largest cross-sectional area among cross section shapes with the same perimeter, the cross-sectional area of the first flow channel 111 gradually increases as the shape of the cross section of the first flow channel 111 gradually becomes a circle, to enable the volume of the first flow channel 111 to be increased. In this way, in a case where the volume of the first flow channel 111 is increased, a total volume of the flow channels 110 of the cooling plate 100 is increased when volumes of other flow channels 110 of the cooling plate 100 remain unchanged. Consequently, an amount of the cooling liquid in the cooling plate 100 does not decrease, improving the cooling efficiency of the cooling plate 100.

It should be noted that the cross section of the first flow channel 111 is assumed to be obtained through cutting the first flow channel 111 along a plane perpendicular to a central axis of the single flow channel 110. The shape of the cross section of the first flow channel 111 refers to a contour shape of the first flow channel 111 in the cross section. The volume of the first flow channel 111 is calculated by multiplying the cross-sectional area by the length of the first flow channel 111.

As illustrated in FIG. 1 to FIG. 3, in some embodiments, the first flow channel 111 has the cross section in a shape of an ellipse. In this way, after the cooling plate 100 is subjected to the external pressure, the shape of the cross section of the first flow channel 111 is likely to change to the circle.

Specifically, the first flow channel 111 has the cross section in the shape of the ellipse, and an outer surface of the first flow channel 111 is a curved surface. Compared with the flow channel 110 having the cross section in a shape of a square or other non-arcs, the outer surface of the flow channel 110 is still the curved surface when the shape of the cross section of the first flow channel 111 is changed from the ellipse to the circle. Deforming one curved surface into another curved surface having a different radius requires less pressure-induced work than deforming a flat surface into a curved surface. In this way, after the cooling plate 100 is subjected to the external pressure, the shape of the cross section of the first flow channel 111 is likely to change from the ellipse to the circle.

It should be noted that the shape of the cross section of the first flow channel 111 has a tendency to change from the ellipse to the circle under the action of the external pressure. The shape of the cross section after a deformation may be closer to the circle than that before the deformation, or the shape of the cross section after the deformation may be the circle. However, the shape of the cross section of the first flow channel 111 after the deformation is not necessarily limited to the circle.

In some embodiments, a direction of the external pressure exerted on the cooling plate 100 is a direction of a major axis of the ellipse. In other words, the direction of the external pressure exerted on the cooling plate 100 is consistent with a direction of a long axis of the cross section of the first flow channel 111 in the shape of the ellipse.

In this way, in the case that the cooling plate 100 is subjected to the external pressure, the long axis of the cross section of the first flow channel 111 is compressed and becomes shorter, while a short axis of the cross section of the first flow channel 111 becomes longer. The shape of the cross section is likely to change to the circle, which can better ensure that the total amount of the cooling liquid in the cooling plate 100 does not decrease and that cooling performance does not deteriorate.

Specifically, when the cooling plate 100 is subjected to the pressure, the long axis of the cross section of the first flow channel 111 in the shape of the ellipse is compressed and becomes shorter, with the shape of the cross section changing to the circle. The minimum force is required when a direction of a force is aligned with a direction of the work done. Accordingly, the shape of the cross section of the first flow channel 111 is more likely to change to the circle when the direction of the external pressure exerted on the cooling plate 100 is aligned with a direction of the long axis of the cross section of the first flow channel 111 in the shape of the ellipse.

As illustrated in FIG. 1 to FIG. 3, in some embodiments, the flow channel 110 in the cooling plate 100 further includes a second flow channel 112. After the cooling plate 100 is subjected to the external pressure, a shape of a cross section of the second flow channel 112 is changed to keep a total volume of the at least one flow channel 110 substantially unchanged.

In the context of the related art, after the cooling plate is deformed due to a compression, the volume decreases, resulting in less cooling liquid being involved in an operation. The excess cooling liquid needs to be discharged and stored in an additional overflow tank (not illustrated). When an electric device provided with the cooling plate in the related art needs to be repaired, the cooling liquid needs to be drained from the overflow tank (not illustrated).

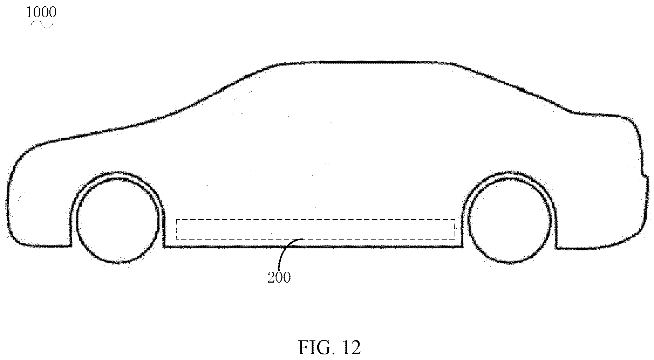

However, according to the above embodiments of the present disclosure, the deformation of each of the first flow channel 111 and the second flow channel 112 enables the total volume of the flow channels 110 in the cooling plate 100 to remain substantially unchanged, ensuring that the cooling liquid does not decrease and the cooling performance of the cooling plate 100 does not deteriorate. Since basically no excess cooling liquid needs to be discharged, a need for the additional overflow tank is eliminated, which saves an arrangement space within an electric device 1000 (as illustrated in FIG. 12). Further, a step of draining the overflow tank (not illustrated) in maintenance scenarios is eliminated, which saves repair costs and improves a repair efficiency.

Specifically, the second flow channel 112 and the above first flow channel 111 are provided independently. The flow channel 110 may be made of a material deformable under a predetermined pressure. For example, the flow channel 110 may be made of an aluminum alloy and formed through processes such as extrusion molding.

It should be noted that, a method for obtaining the shape of the cross section of the second flow channel 112 and a method for calculating a volume of the second flow channel 112 are the same as those for the first flow channel 111, and thus details thereof will be omitted here.

As illustrated in FIG. 1 to FIG. 3, in some embodiments, the second flow channel 112 has the cross section in a shape of a circle, and after the cooling plate 100 is subjected to the external pressure, the shape of the cross section of the second flow channel is changed from circle to non-circle. In this way, a cross-sectional area of the second flow channel 112 is gradually decreased, causing the volume of the second flow channel 112 to be decreased.

As illustrated in FIG. 1 to FIG. 3, the volume of the second flow channel 112 is decreased after the cooling plate 100 is subjected to the external pressure, compensating for an increase in the volume of the flow channel 110 following the deformation of the first flow channel 111. In this way, the total volume of the at least one flow channel 110 remains substantially unchanged, which avoids a reduction in actual heat exchange between the cooling liquid and an ambient environment. This reduction would otherwise occur in the case that a part of the flow channel 110 is not in full contact with the cooling liquid when the volume of the flow channel 110 is increased while the amount of the cooling liquid remains unchanged. As a result, a probability of a decrease in the cooling efficiency of the cooling plate 100 is further reduced. In this way, during use, the total amount of the cooling liquid in the cooling plate 100 can remain substantially unchanged, which can keep the cooling efficiency of the cooling plate 100 stable and prevent the cooling performance from deteriorating.

Similarly, based on the principle that the circle has the largest cross-sectional area among cross-section shapes with the same perimeter, the shape of the cross section of the second flow channel 112 is gradually changed from the circle to the non-circle after the cooling plate 100 is subjected to the external pressure, causing the volume of the second flow channel 112 to be gradually decreased.

As illustrated in FIG. 1 to FIG. 3, in some embodiments, after the cooling plate 100 is subjected to the external pressure, the shape of the cross section of the second flow channel 112 is changed from the circle to an ellipse.

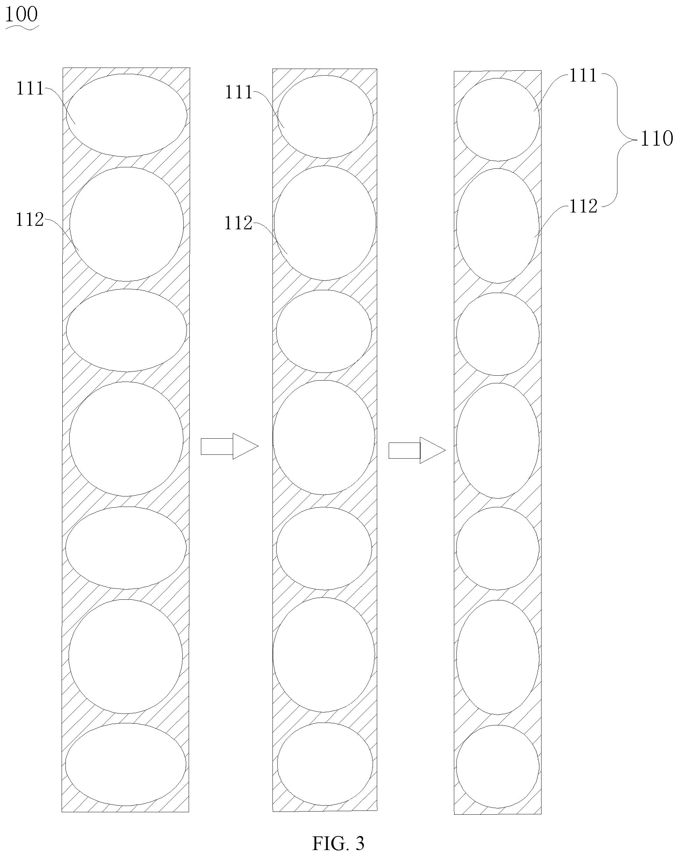

As illustrated in FIG. 3, under the action of the pressure, the cross section of the second flow channel 112 in the shape of circle is more likely to change to ellipse, making a reduction in the volume of the second flow channel 112 closer to an increase in the volume of the first flow channel 111 as the shape of the cross section of the first flow channel 111 is changed from the ellipse to the circle. In this way, the total amount of the cooling liquid remains closer to a constant value, maintaining stability of the cooling performance of the cooling plate 100.

Specifically, the second flow channel 112 has the cross section in the shape of the circle. After the cooling plate 100 is subjected to the external pressure, the second flow channel 112 is compressed and deformed and has a diameter that becomes shorter. In accordance with a principle that the shape of the cross section of the first flow path 111 is more likely to be deformed into the circle when a direction of the pressure is aligned with the direction of the long axis of the cross section of the first flow channel 111 in the shape of the ellipse, a diameter of the second flow path 112 that aligns with the direction of the external pressure decreases most significantly, for a reason that a work efficiency is highest when the direction of the force is aligned with the direction of work. Whereas a diameter perpendicular to the external pressure remains substantially unchanged due to ineffective work done when the direction of the force is perpendicular to the direction of work. In addition, since changes between curved surfaces are more likely to be achieved than those between a curved surface and a flat surface, the shape of the cross section of the second flow channel 112 is more likely to change from the circle to the ellipse under the action of the pressure.

It should be noted that the shape of the cross section of the second flow channel 112 has a tendency to change from the circle to the ellipse once the second flow channel is under the pressure. The shape of the cross section of the second flow channel 112 may change to the ellipse, or may be closer to the ellipse than that before the deformation. The shape of the cross section of the second flow channel 112 after the deformation is not necessarily limited to the ellipse.

As illustrated in FIG. 1 to FIG. 3, in some embodiments, a plurality of first flow channels 111 and a plurality of second flow channels 112 are formed. The plurality of first flow channels 111 and the plurality of second flow channels 112 are alternately arranged.

By reasonably determining quantities of the first flow channels 111 and the second flow channels 112, the increase in the volume of the first flow channel 111 is ensured to be substantially equal to the decrease in the volume of the second flow channel 112 after the cooling plate 100 is subjected to the pressure, keeping the total volume of the flow channels 110 substantially unchanged. Therefore, the total amount of the cooling liquid in the cooling plate 100 remains substantially unchanged, which prevents the cooling performance of the cooling plate 100 from deteriorating and eliminates a need to discharge the excess cooling liquid, saving costs of storing the excess cooling liquid.

Specifically, the flow channel 110 may be provided as a separate member and then assembled inside the cooling plate 100, or formed together with the cooling plate 100 through extrusion molding. Each of the flow channel 110 and the cooling plate 100 may be made of a material that is plastically deformable and has satisfactory thermal conductivity, such as an aluminum alloy. When the plurality of flow channels 110 are formed for the cooling liquid, an increase in a total volume of the plurality of first flow channels 111 after being deformed due to a compression is substantially equal to a reduction in a total volume of the plurality of second flow channels 112, allowing the total volume of the flow channels 110 to remain substantially unchanged.

As illustrated in FIG. 1 to FIG. 3, in some embodiments, a plurality of flow channels 110 are formed. Two adjacent flow channels 110 of the plurality of flow channels 110 are spaced apart from each other.

The two adjacent flow channels 110 are spaced apart from each other with a reserved gap between them. In this way, the cross section of the flow channel 110 can be ensured to be deformed in a designed direction after the cooling plate 100 is subjected to the pressure.

Specifically, as described above, the cooling plate 100 may be made of a material that is deformable under a pressure. The first flow channel 111 and the second flow channel 112 are separated by a distance, the first flow channel 111 and another first flow channel 111 are separated by a distance, and the second flow channel 112 and another second flow channel 112 are separated by a distance to ensure a sufficient space for extensions of the flow channels 110 in all directions when the external pressure is applied. The distance may be slightly greater than a sum of deformation amounts of the two adjacent flow channels 110 in an extending direction of the distance.

As illustrated in FIG. 1 to FIG. 3, in some embodiments, a cavity is formed between the two adjacent flow channels 110; and/or a part of the cooling plate 100 that located between the two adjacent flow channels 110 is of a solid structure.

In the case that the cooling plate 100 is subjected to the pressure, a deformation of the flow channel 110 occurs. The above cavity can compensate for a required space after the deformation of the flow channel 110. The solid structure of the cooling plate 100, serving as a spacer, can also compensate for the required space after the deformation of the flow channel 110. In this way, the cross section of the flow channel 110 can be ensured to be deformed adequately after the cooling plate 100 is subjected to the pressure, to realize the increase or the decrease in the volume of the flow channel 110, which keeps the total amount of the cooling liquid involved in an operation unchanged and prevents the cooling efficiency of the cooling plate 100 from decreasing.

Similarly, the cooling plate 100 may be made of a material that is deformable under the pressure, such as an aluminum alloy. Specifically, the cavity has a volume that may be slightly smaller than that of the gap between the two adjacent flow channels 110, or slightly greater than or equal to an increase or a decrease in a volume of one flow channel 110 after the shape of the cross section of the one flow channel 110 is changed.

### Second Embodiment

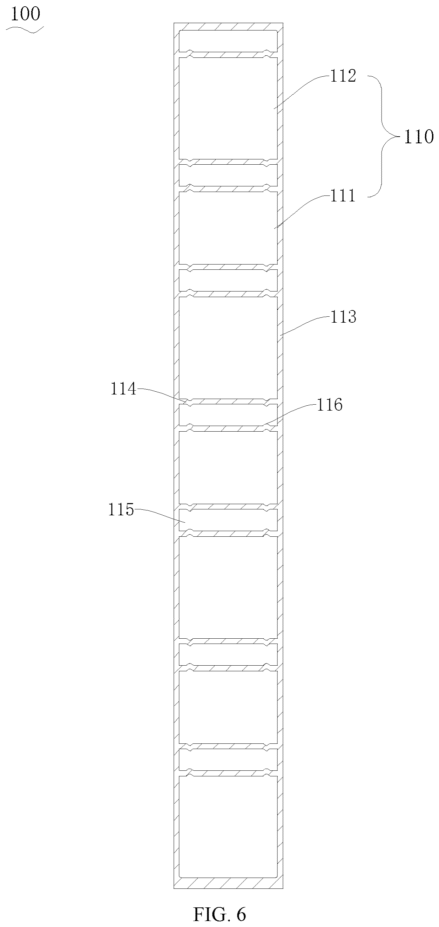

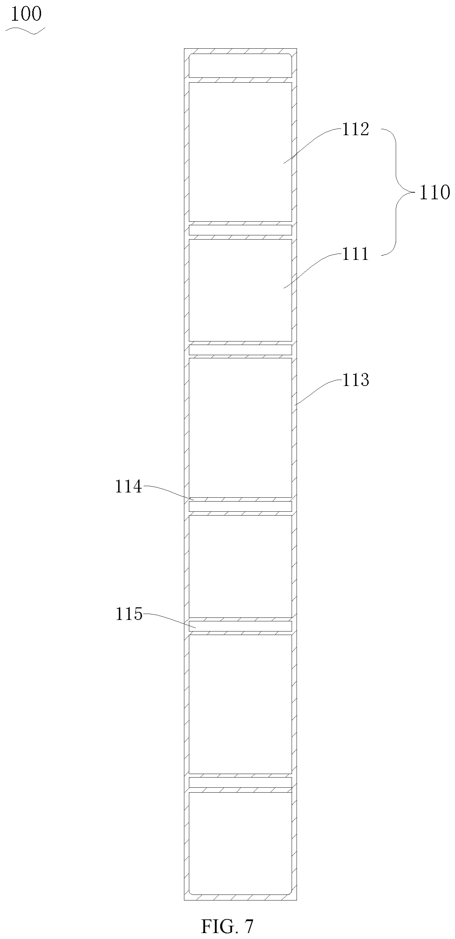

As illustrated in FIG. 6 to FIG. 8, the cooling plate 100 according to this embodiment of the present disclosure has a plurality of flow channels 110. The plurality of flow channels 110 includes a first flow channel 111 and a second flow channel 112. After the cooling plate 100 is subjected to the external pressure, a volume of the second flow channel 112 is decreased, and the volume of the first flow channel 111 is increased, to enable a total volume of the plurality of flow channels 110 to remain substantially unchanged.

When the cooling plate 100 is subjected to the external pressure, the flow channels 110 in the cooling plate 100 are deformed, changing shapes of the cross sections of the flow channels 110. As a result, the volume of the second flow channel 112 is decreased, and the volume of the first flow channel 111 is increased, to enable the total volume of the plurality of flow channels 110 to remain substantially unchanged. In this way, the cooling liquid inside the cooling plate 100 is prevented from overflowing and the total amount of the cooling liquid remains substantially unchanged, improving the cooling efficiency of the cooling plate 100.

Specifically, the cooling plate 100 may be the device that exchanges heat through the cooling liquid. The cooling plate 100 can be configured to exchange heat with the device or the object that requires the temperature adjustment, to reduce the temperature of the device or the object. For example, the cooling plate 100 can be configured to exchange heat with the battery cell 210 to lower the temperature of the battery cell 210. The cooling plate 100 may be configured as a plate-like structure having the predetermined thickness. For the traction battery of the new energy vehicle, the cooling plate 100 applicable in the traction battery has the thickness that may range from 15 mm to 35 mm.

The cooling plate 100 may be made of a material having satisfactory thermal conductivity, e.g., a metallic material such as an aluminum alloy. The cooling liquid in the cooling plate 100 may be the substance having fluidity and facilitating heat conduction. The flow channel 110 of the cooling plate 100 may have a columnar hollow structure. An arrangement of the flow channel 110 can guide a flow direction of the cooling liquid. The cooling liquid can flow in and out of the flow channel 110. Heat exchange is performed via the outer surface of the cooling plate 100.

It should be understood that after the shape of the cross section of the flow channel 110 is changed, a perimeter of the flow channel 110 generally remains unchanged. Among quadrilaterals with the same perimeter, a square has a largest area, and an area increases as a difference in side lengths decreases. Based on such a principle, the cross-sectional area of the first flow channel 111 becomes larger, and thus the volume of the first flow channel 111 is increased.

Likewise, the cross-sectional area of the second flow channel 112 gradually decreases, which causes the volume of the second flow channel 112 to be decreased, compensating for the increase in the volume of the first flow channel 111. Therefore, in a case where the volume of the second flow channel 112 is decreased and the volume of the first flow channel 111 is increased, the total volume of the flow channels 110 of the cooling plate 100 remains substantially unchanged, which ensures that the amount of the cooling liquid in an operation in the cooling plate 100 does not decrease, improving the cooling efficiency of the cooling plate 100.

It should be noted that the cross section of the second flow channel 112 is assumed to be obtained through cutting the second flow channel 112 along a plane perpendicular to a central axis of the single flow channel 110. The shape of the cross section of the second flow channel 112 refers to a contour shape of the second flow channel 112 in the cross section. The cross-section of the first flow channel 111 is obtained in the same manner as described above. The volume of the flow channel 110 is calculated by multiplying the cross-sectional area by a length of the flow channel 110.

In some embodiments, the cross section of the second flow channel 112 of the cooling plate 100 is in a shape of a polygon.

Compared with the flow channels 110 having the cross sections in the shape of the circle, the flow channels 110 having the cross sections in the shape of the polygon can be arranged more densely within the cooling plate 100 and each have a side wall attached more closely to an outer frame 113 of the cooling plate 100, in such a manner that an area of the side wall of the flow channel 110 for heat exchange at an outer side of the side wall of the flow channel 110 becomes greater and a greater quantity of flow channels 110 can be formed. In this way, an internal space of the cooling plate 100 is fully utilized, which improves a utilization rate of the cross section of the cooling plate, more effectively addressing a heat dissipation issue of the electric device 1000 provided with the cooling plate 100.

Specifically, the shape of the cross section of the second flow channel 112 may be a hexagon, a pentagon, or other irregular structures having curved sides. The second flow channel 112 may be made of a material that has satisfactory thermal conductivity and is deformable under a predetermined pressure. For example, the second flow channel 112 may be made of an aluminum alloy and formed through extrusion molding. The flow channel 110 may be configured as a separate member and then assembled inside the cooling plate 100 or formed together with the cooling plate 100 through extrusion molding.

As illustrated in FIG. 6 to FIG. 8, in some embodiments, the cross section of the second flow channel 112 of the cooling plate 100 is in a quadrilateral shape, and after the cooling plate 100 is subjected to the external pressure, a length difference between two adjacent sides of the quadrilateral shape is increased.

A side of the quadrilateral that is attached to a wall of the cooling plate 100 has a length equal to or greater than that of another side. As an example, the shape of the cross section of the second flow channel 112 before the cooling plate 100 is subjected to the external pressure may be a square. A side in a same direction as or in a direction parallel to a direction of the external pressure is compressed and becomes shorter, while sides adjacent to said side, i.e., two sides attached to the wall of the cooling plate 100, become longer, increasing a length difference between the two sides. As a result, the shape of the cross section of the second flow channel 112 gradually changes from the square to a rectangle having two adjacent sides of unequal lengths.

Based on a principle that a square has a largest cross-sectional area among rectangular cross sections with the same perimeter, the cross-sectional area of the second flow channel 112 decreases as the shape of the cross section of the first flow channel 111 is gradually changed from the rectangle having the two adjacent sides of unequal lengths to the square, leading to a gradual reduction in the volume of the second flow channel 112. Therefore, even when the volume of the first flow channel 111 remains constant or is increased, the total volume of the flow channels 110 is not increased, which can ensure that the cooling liquid is kept in full contact with an inner wall of the flow channel 110, achieving a maximum area for heat exchange without reducing a thermal transfer efficiency.

It should be noted that, in the present disclosure, the shape of the cross section of the second flow channel 112 before the cooling plate 100 is subjected to the pressure may be a square, a rectangular, an irregular quadrilateral, or the like. After the cooling plate 100 is subjected to the external pressure, a length difference between a side in contact with the wall of the cooling plate 100 and another side is increased. The shape of the cross section of the second flow channel 112 before the cooling plate 100 is subjected to the external pressure is not limited to the square.

As illustrated in FIG. 6 to FIG. 8, in some embodiments, the cross section of the first flow channel 111 of the cooling plate 100 is in a shape of a polygon. Similar to the second flow channel 112 having the cross section in the shape of the polygon according to the above embodiments, the first flow channel 111 having the cross section in the shape of the polygon can improve an efficiency of heat exchange and increase a utilization rate of the internal space of the cooling plate 100.

As an example, the first flow channels 111 may have the cross sections each in the shape of the rectangle and arranged densely in the cooling plate 100. A structure compact between the cooling plate 100 and the first flow channel 111 can enhance both the efficiency of heat exchange with the cooling liquid and the utilization rate of the internal space of the cooling plate 100. In the present disclosure, the shape of the cross section of the first flow channel 111 is not limited to the rectangle. In some embodiments, the shape of the cross section of the first flow channel 111 may be a triangle, a hexagon, or other irregular shapes having curved sides, as long as normal flowing of the cooling liquid and a deformation under a pressure can be achieved. The flow channel 110 may be formed together with the cooling plate 100 through extrusion, or embedded into the cooling plate 100.

As illustrated in FIG. 6 to FIG. 8, in some embodiments, the cross section of the first flow channel 111 of the cooling plate 100 is in a shape of a quadrilateral, and after the cooling plate 100 is subjected to the external pressure, a length difference between two adjacent sides of the quadrilateral is decreased.

When the cooling plate 100 is subjected to the external pressure, the flow channel 110 in the cooling plate 100 is compressed and deformed. In the cross section of the first flow channel 111, a side in a same direction as or in a direction parallel to a direction of the pressure is compressed and becomes shorter, while a side at a large angle relative to the direction of the pressure becomes longer. As a result, the length difference between the two sides is decreased, and the two sides gradually approach an equal length, causing the shape of the cross section of the first flow channel 111 to gradually change to a square.

Referring to the above principle that the square has the largest cross-sectional area among rectangular cross sections with the equal perimeter, the volume of the first flow channel 111 is gradually increased, which can compensate for the decrease in the volume of the second flow channel 112, enabling the total volume of the plurality of flow channels 110 to remain substantially unchanged. As a result, the cooling liquid in the cooling plate 100 is prevented from overflowing and the total volume remains substantially unchanged, improving the cooling efficiency of the cooling plate 100.

Specifically, the first flow channel 111 may have the cross section in the shape of the rectangle, with four sides connected in pairs, each pair of sides being perpendicular to each other. In each pair of sides connected to each other, one side is in a direction parallel to the direction of the external pressure, while the other side is in a direction perpendicular to the direction of the external pressure. Before the cooling plate 100 is subjected to the pressure, a length of the side arranged in the direction parallel to the direction of the pressure is greater than a length of the side arranged in the direction perpendicular to the direction of the pressure. The side arranged in the direction parallel to the direction of the pressure becomes shorter after the cooling plate 100 is subjected to the pressure, whereas the side arranged in the direction perpendicular to the direction of the pressure can remain unchanged in length, as no work is done when the direction of the force is perpendicular to the direction of work. Consequently, after the cooling plate 100 is subjected to the external pressure, a length difference between two connected sides of the rectangle is decreased, and thus the shape of the cross section of the first flow channel 111 is changed from the rectangle to the square, increasing the cross-sectional area of the first flow channel 111 and the volume of the first flow channel 111.

It should be noted that after the cooling plate 100 is subjected to the pressure, the shape of the cross section of the first flow channel 111 has a tendency to change to the square. The shape of the cross section of the first flow channel 111 after the deformation may be the square or closer to the square compared with the shape of the cross section of the first flow channel 111 before the deformation, but the shape of the cross section of the first flow channel 111 after the deformation is not limited to the square.

Of course, in other embodiments, the shape of the cross section of each of the first flow channel 111 and the second flow channel 112 may be a circle, an ellipse, etc. For example, the shape of the cross section of the second flow channel 112 is a circle and that of the first flow channel 111 is an ellipse. In this example, after the cooling plate 100 is subjected to the external pressure, the shape of the cross section of the second flow channel 112 may change to an ellipse to enable the volume of the second flow channel 112 to be decreased, while the shape of the cross section of the first flow channel 111 may change to a circle to enable the volume of the first flow channel 111 to be increased, keeping a total volume of the first flow channel 111 and the second flow channel 112 substantially unchanged.

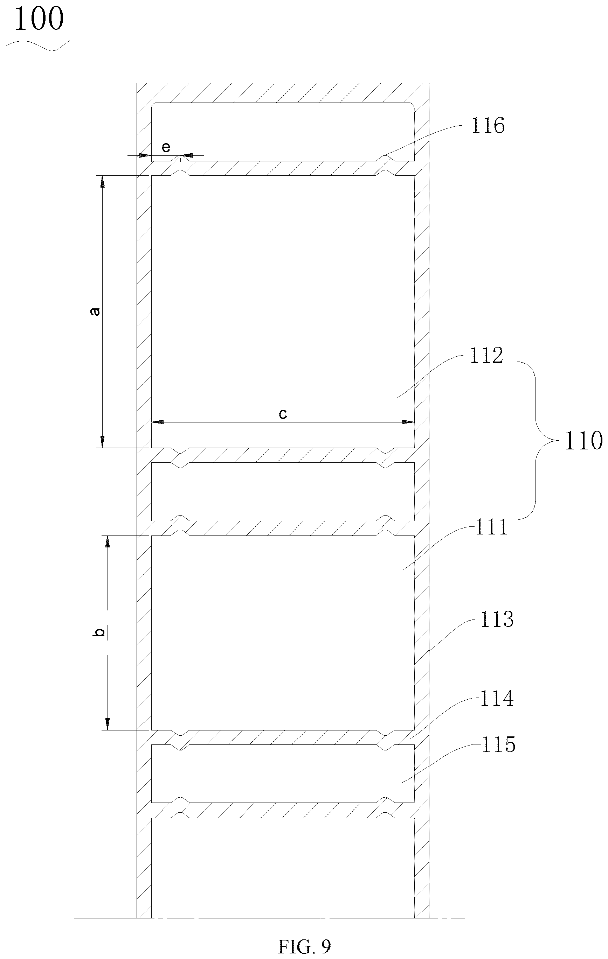

As illustrated in FIG. 9, in some embodiments, the cooling plate 100 includes an outer frame 113 and a plurality of partition plates 114 disposed within the outer frame 113 and arranged at intervals. The plurality of flow channels 110 are defined by the plurality of partition plates 114 and the outer frame 113. Two adjacent flow channels 110 of the plurality of flow channels 110 are spaced apart from each other.

When the cooling plate 100 is subjected to the external pressure, the outer frame 113 is deformed inwardly, and the partition plate 114 is compressed at two sides of the partition plate 114, causing changes in lengths and positions of the outer frame 113 and the partition plate 114. In this way, the cross-sectional areas of the flow channels 110 defined by the partition plates 114 and the outer frame 113 are changed. That is, the volume of the second flow channel 112 is decreased, and the volume of the first flow channel 111 is increased.

In this way, the total volume of the flow channels 110 is ensured to remain substantially unchanged, which can in turn ensure that the total amount of the cooling liquid used inside the cooling plate 100 remains substantially unchanged, allowing the cooling performance of the cooling plate 100 to stay stable. A gap exists between two adjacent flow channels 110. When the cooling plate 100 is deformed under the pressure, the side wall of the flow channel 110 moves towards the gap and is deformed. Such a gap allows a space to be reserved for changes in the cross section of the flow channel 110, in such a manner that the volume of the flow channel 110 can be varied based on a design scheme.

Specifically, a gap channel 115 is located between the first flow channel 111 and the second flow channel 112 and is formed by two partition plates 114. A length of the partition plate 114 serves both as a side length of the gap channel 115 and as a side length of the cross section of the flow channel 110. A reserved gap between adjacent flow channels 110 may be an air channel. Before the cooling plate 100 is subjected to the pressure, as illustrated in FIG. 9, the gap channel 115 has a width **c** smaller than or equal to a length **a** of a side of the second flow channel 112 attached to the cooling plate 100, and greater than a length **b** of a side of the first flow channel 111 attached to the cooling plate 100, i.e., **c**≤**a**, and **c>b.** After the cooling plate 100 is subjected to the pressure, the length of the partition plate 114 becomes shorter, and an amount of a reduction in the length of the partition plate 114 is compensated by a length of a side of the flow channel 110 attached to the cooling plate 100.

It should be noted that the width of the gap channel 115 may be equal to the width of the partition plate 114 and also equal to a length of a side of the flow channel 110 that is not attached to the wall of the cooling plate. In the present disclosure, the letter "c" refers to the above three lengths.

As illustrated in FIG. 6 to FIG. 8, in some embodiments, the plurality of first flow channels 111 and the plurality of second flow channels 112 are formed in the cooling plate 100. The plurality of first flow channels 111 and the plurality of second flow channels 112 are alternately arranged.

By reasonably determining the quantities of the first flow channels 111 and the second flow channels 112 and the side length of the flow channel 110, a total decrease in the volumes of the second flow channels 112 is ensured to be substantially equal to a total increase in the volumes of the first flow channels 111 after the cooling plate 100 is subjected to the pressure. Therefore, the total volume of the flow channels 110 remains unchanged after the deformation under the pressure, which ensures that the total amount of the cooling liquid used remains unchanged, preventing the cooling efficiency of the cooling plate 100 from being reduced. In addition, no excess cooling liquid needs to be discharged, which eliminates a need for an additional storage device for the excess cooling liquid, reducing costs of the electric device 1000 provided with the cooling plate 100 and saving an arrangement space for the electric device 1000.

Specifically, three or more first flow channels 111 and three or more second flow channels 112 may be formed. The cross-sectional area of the flow channel 110 can be calculated through side lengths of the rectangle. A change in the cross-sectional area of the flow channel 110 is a difference between the cross-sectional area after the deformation and the cross-sectional area before the deformation. That is, the cross-sectional area of the second flow channel 112 satisfies S₁=a×c, and the cross-sectional area of the first flow channel 111 satisfies S₂=b×c, where ΔS=S_{after}-S_{before}.

As illustrated in FIG. 9, in some embodiments, the partition plate 114 is provided with a guide structure 116. The guide structure 116 is configured to guide a deformation of the partition plate 114 to enable the volume of the second flow channel 112 to be decreased and the volume of the first flow channel 111 to be increased.

When subjected to the external pressure, the cooling plate 100 transfers the pressure to the flow channel 110, which then transfers the pressure to the partition plate 114. The guide structure 116 disposed at the partition plate 114 enables an internal stress of the partition plate 114 to be concentrated at the guide structure 116. In this way, the deformation of the partition plate 114 is concentrated in a direction of the guide structure 116, which enables the volume of the second flow channel 112 to be decreased and the volume of the first flow channel 111 to be increased, keeping the total amount of the cooling liquid flowing normally in the cooling plate 100 unchanged. Consequently, a loss of the cooling plate 100 caused by the deformation is reduced, allowing the cooling performance to stay stable without lowering the cooling efficiency.

Specifically, the guide structure 116 illustrated in FIG. 9 is a bending structure disposed at the partition plate 114 and protruding towards the gap channel 115. The guide structure 116 may be made of a same material as the partition plate 114 and formed integrally with the partition plate 114. As illustrated in the figures, after being compressed and deformed under the pressure, a part of the partition plate 114 that is disposed between the guide structure 116 and an inner wall of the cooling plate 100 is gradually attached to the side wall of the flow channel 110 or the inner wall of the cooling plate 100. Therefore, each of the length **a** and/or the length **b** of the side of the flow channel 110 attached to the inner wall of the cooling plate 100 becomes longer due to a compensation by the partition plate 114, enabling the shape of the cross section of the flow channel 110 to change. It should be noted that, in some embodiments, a sum of the length **b** of the side of the first flow channel 111 attached to the wall of the cooling plate 100 plus twice a distance **e** between the guide structure 116 and the wall of the cooling plate 100 is still less than or equal to a width c of the partition plate 114, i.e., **b**+**e**×2 ≤ **c.**

As illustrated in FIG. 6 to FIG. 9, in some embodiments, the guide structure 116 in the cooling plate 100 has at least one of: a recess formed at the partition plate 114; a bending structure formed at the partition plate 114; and a bevel edge disposed at the partition plate 114.

A reasonable deformation inducing structure is disposed at an overlapping edge where the flow channel 110 and the gap channel 115 are overlapped, which ensures that the flow channel 110 is deformed in a designed direction after the cooling plate 100 is subjected to the pressure. Further, within a service life of the cooling plate 100, the change in the cross-sectional area is always ensured to be unidirectional: either increasing or decreasing, which ensures that the total volume remains stable throughout the service life of the cooling plate 100, preventing the cooling liquid from overflowing.

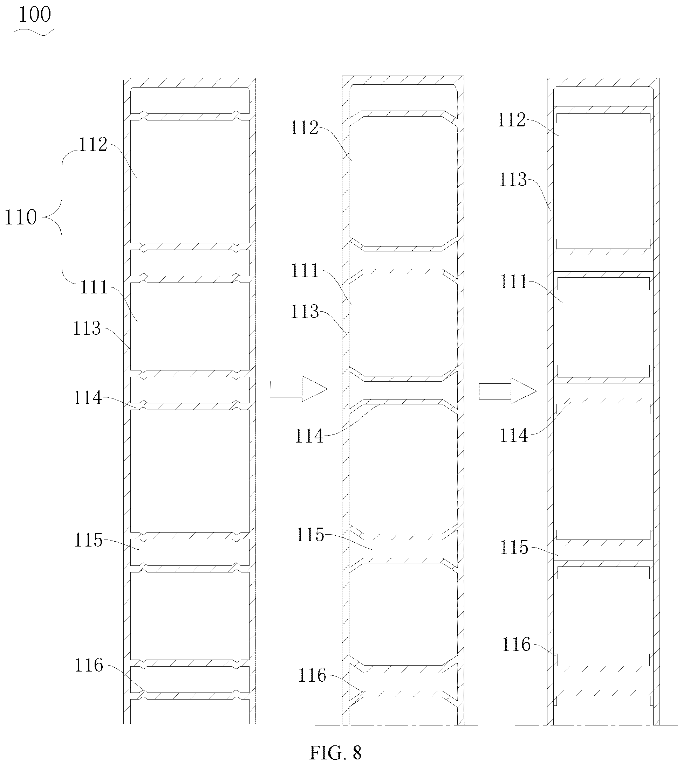

As an example, the guide structure 116 illustrated in FIG. 9 is the bending structure disposed at the partition plate 114 and protruding towards the gap channel 115. After the cooling plate 100 is subjected to the external pressure, a deformation process under guidance of the guide structure 116 is as illustrated in FIG. 8. An inward pressure is exerted by the cooling plate 100 on the flow channel 110. The partition plate 114 is compressed between inner walls of the cooling plate 100 at two sides of the cooling plate 100. Since the guide structure 116 protrudes towards the gap, a stress at the guide structure 116 is more concentrated than that at other parts of the partition plate when two ends of the partition plate 114 are under pressure, making the partition plate 114 more likely to bend from the guide structure 116 in a bending direction of the guide structure 116. Consequently, a part of the partition plate 114 that disposed between the guide structure 116 and the inner wall of the cooling plate 100 is gradually attached to the inner wall of the cooling plate 100, causing the side of the flow channel 110 that is attached to the inner wall of the cooling plate 100 to become longer due to the compensation by the partition plate 114. In a final state of the deformation, the guide structure 116 bends at 90° and is attached to the inner wall of the cooling plate 100, in which case a compensated length is a length e of a part of the partition plate that is located between the guide structure 116 and the cooling plate 100. In some embodiments, in the final state of the deformation, the guide structure 116 may also not be completely attached to the cooling plate 100.

It should be noted that, during the deformation of the cooling plate 100 under the pressure, a thickness of each of the outer frame 113 and the partition plate 114 does not change.

In the context of the related art, after the cooling plate is deformed due to the compression, the excess cooling liquid overflows and needs to be stored in the additional overflow tank (not illustrated). When the electric device provided with the cooling plate in the related art needs to be repaired, the cooling liquid needs to be drained from the overflow tank (not illustrated). According to the embodiments of the present disclosure, the deformation of the cooling plate 100 under the pressure enables the total volume to remain substantially unchanged, and thus the need for the additional overflow tank is eliminated, which can eliminate the step of draining the cooling liquid in maintenance scenarios, improving the repair efficiency and reducing use and maintenance costs.

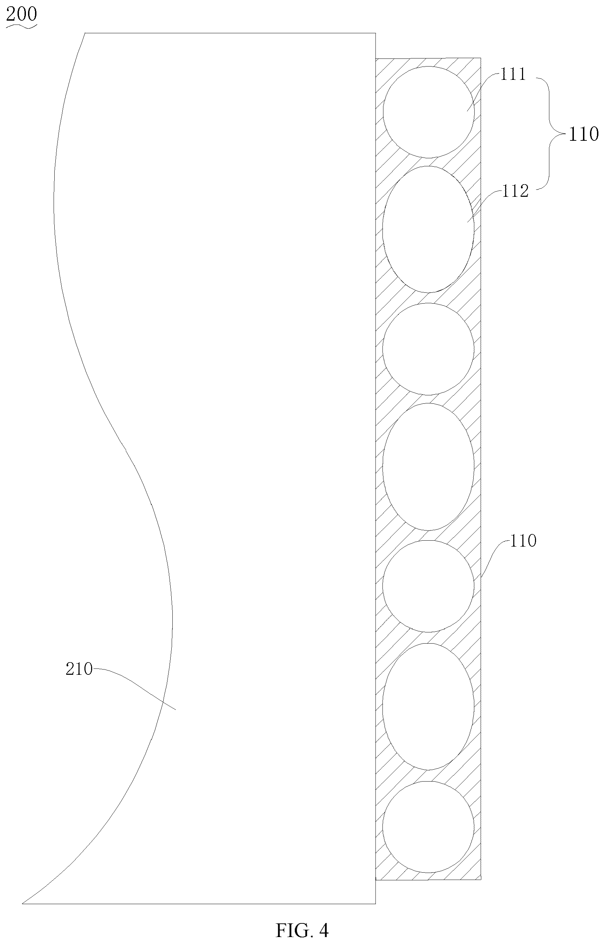

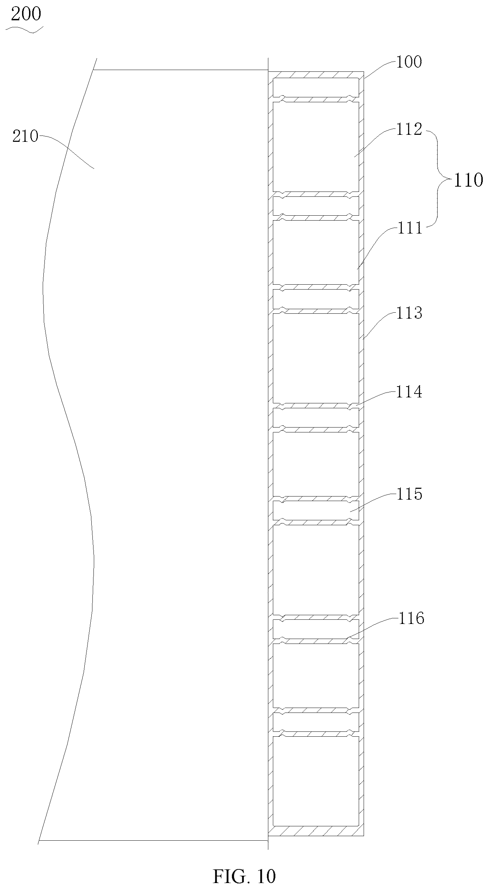

As illustrated in FIG. 4, FIG. 5, FIG. 10, and FIG. 11, the battery pack 200 according to the embodiments of the present disclosure includes the above cooling plate 100 and the battery cell 210 attached to the cooling plate 100.

A thermal connection between the cooling plate 100 and the battery cell 210 is established, and can be achieved through enabling outer surfaces of the cooling plate 100 and the battery cell 210 to be attached to each other. By thermally connecting the cooling plate 100 to the battery cell 210, the battery pack 200 exchanges heat with the battery cell 210, which enables the cooling plate 100 to reduce a temperature difference across the battery cell 210 to prevent the battery pack 200 from operating in an operation condition having a large temperature difference, ensuring stable performance of the battery pack 200, enhancing safety of the battery cell 210, and reducing thermal management energy consumption of the battery pack 200. During use, the battery cell 210 gradually expands, generating a permanent deformation, and compressing the cooling plate 100. In this way, the external pressure is exerted on the cooling plate 100. Therefore, the flow channel 110 in the cooling plate 100 is deformed, which changes the shape of the cross section of the flow channel 110 while keeping a total length of the flow channel 110 substantially unchanged. As a result, the volume of the first flow channel 111 is increased, while the volume of the second flow channel 112 is decreased, which ensures that the total volume of the cooling plate 100 remains substantially unchanged during use and therefore prevents the cooling performance of the cooling plate 100 from deteriorating, extending a service life of the battery cell 210.

Specifically, the battery pack 200 may have a battery structure formed by packaging a plurality of battery cells 210 connected in parallel or in series. The battery cell 210 may be a cell such as a lithium-ion battery, a carbonate battery, or a lead-acid battery. Alternatively, the battery cell 210 may be a battery module composed of a plurality of cells.

Within the cell, during discharging, an oxidation reaction occurs at a negative electrode to release electrons towards an external circuit, while a reduction reaction occurs at a positive electrode to receive electrons from the external circuit. During charging of the cell, the negative electrode receives electrons and undergoes a reduction reaction, while the positive electrode loses the electrons and undergoes an oxidation reaction. As an example, the cell is the lithium-ion battery. During charging of the lithium-ion battery, lithium ions are deintercalated from the positive electrode and intercalated into the negative electrode, which causes an increase in an interlayer spacing of the negative electrode, leading to an expansion and a deformation of the battery. In addition, heat is generated during a redox reaction at the electrode. An excessively high temperature can lead to the expansion of the battery, compressing the cooling plate 100.

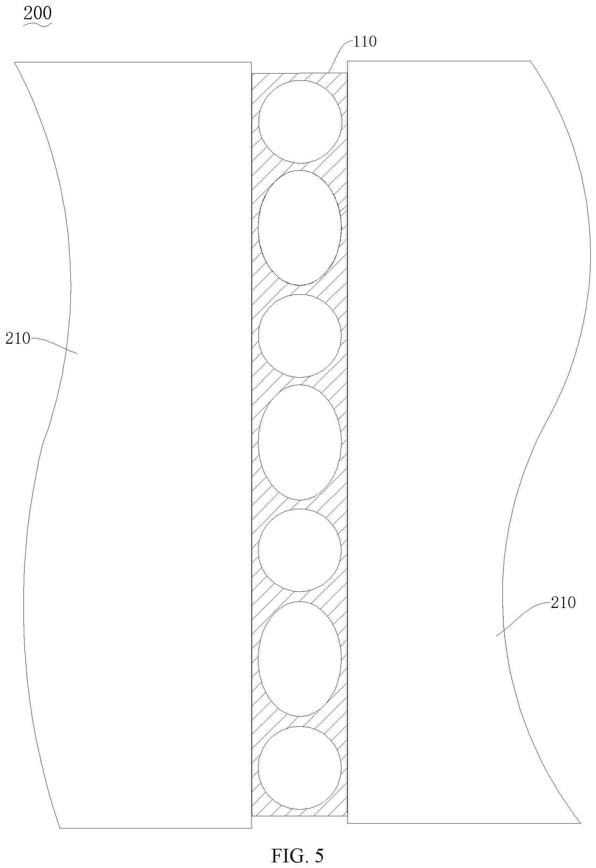

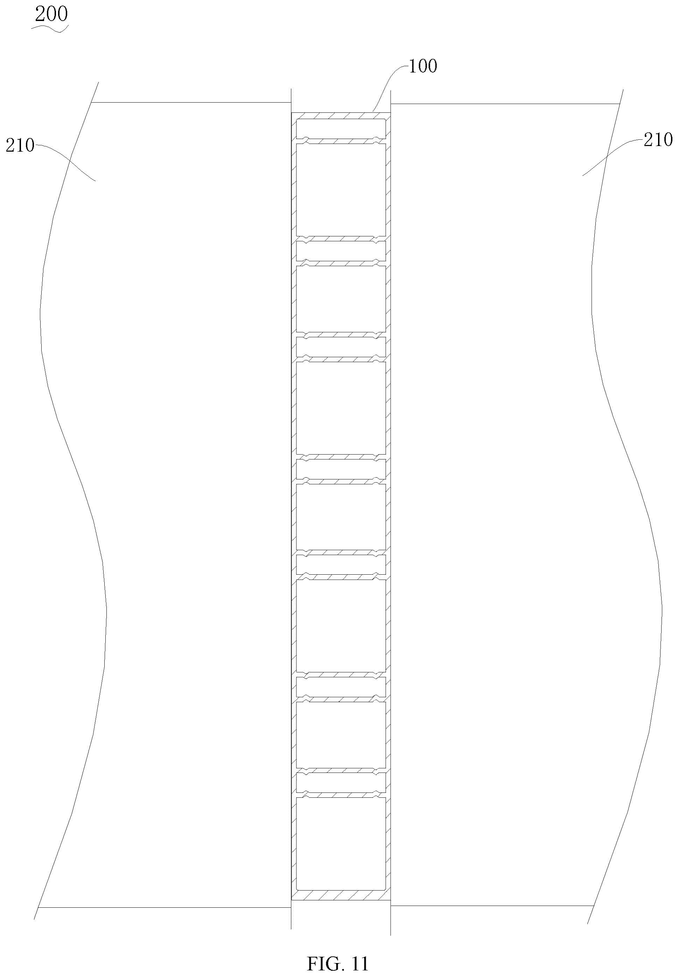

As illustrated in FIG. 5 and FIG. 11, in some embodiments, the cooling plate 100 is provided with the battery cell 210 at each of two sides of cooling plate 100 that are opposite to each other.

The battery cell 210 may be attached to the cooling plate 100 at outer surfaces of the cooling plate 100 that are arranged at two sides of the cooling plate 100 in a thickness direction of the cooling plate 100. Each of the battery cells 210 at the two sides of the cooling plate 100 can undergo an expansion and a deformation to provide a pressure for the cooling plate 100, in such a manner that the shape of the cross section of the flow channel 110 in the cooling plate 100 is changed. Under a same operation condition, a degree of the expansion and the deformation of the battery cell 210 disposed at each of the two sides of the cooling plate 100 may be similar to that of the battery cell 210 disposed at only one side of the cooling plate 100. However, since a pressure applied to the two sides of the cooling plate 100 is greater than that applied to the only one side, a deformation effect of the cooling plate 100 can be more pronounced.

Specifically, the battery cell 210 may include a short pack cell or a long pack cell. The short pack cell may be one-half or one-third a length of the long pack cell. The battery cell 210 may be attached to a side surface of the cooling plate 100 in the thickness direction of the cooling plate 100, or to each of two side surfaces of the cooling plate 100 that are opposite to each other. One battery cell 210 may correspond to one or more cooling plates 100.

As illustrated in FIG. 12, the electric device 1000 according to the embodiments of the present disclosure includes the battery pack 200 according to the above embodiments.

The battery pack 200 and the cooling plate 100 have a compact structure. Under various operation conditions, the cooling plate 100 can regulate a temperature difference balance within the battery pack 200 to reduce an energy loss, improving a battery life and operational safety of the electric device 1000.

Specifically, the battery pack 200 may be a combination of batteries capable of providing power for the electric device 1000, such as a lithium-ion battery and a phosphate battery. The electric device 1000 may be a transportation device powered by the battery pack 200, e.g., an electric scooter and a new energy vehicle. The new energy vehicle may be an all-electric vehicle, a hybrid electric vehicle, a range-extended vehicle, or the like. The battery pack 200 may be disposed at a bottom or a tail of the electric device 1000, such as a vehicle chassis. The battery pack 200 can supply power to the electric device 1000 to meet electrical demands such as starting, driving, and vehicle-mounted electrical devices of the electric device 1000, such as the new energy vehicle.

Reference throughout this specification to "an embodiment", "some embodiments", "an illustrative embodiment", "an example", "a specific example", or "some examples" means that a particular feature, structure, material, or characteristic described in connection with the embodiment or example is included in at least one embodiment or example of the present disclosure. The above schematic phrases in various places throughout this specification are not necessarily referring to the same embodiment or example. Further, the particular features, structures, materials, or characteristics may be combined in any suitable manner in one or more embodiments or examples.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims as appended and their equivalents.

## Claims

1. A cooling plate, having at least one flow channel, the at least one flow channel comprising a first flow channel, wherein the first flow channel has a cross section in a non-circular shape, wherein in the case that the cooling plate is subjected to an external pressure, the shape of the cross section of the first flow channel is changed to increase a volume of the first flow channel.

2. The cooling plate according to claim 1, wherein the cooling plate has a plurality of flow channels, the plurality of flow channels comprising a first flow channel and a second flow channel, wherein in the case that the cooling plate is subjected to the external pressure, a volume of the second flow channel is decreased, and the volume of the first flow channel is increased, to keep a total volume of the plurality of flow channels substantially unchanged.

3. The cooling plate according to claim 1, wherein:
the shape of the cross section of the first flow channel is ellipse; and
in the case that the cooling plate is subjected to the external pressure, the shape of the cross section of the first flow channel is changed from ellipse to circle.

4. The cooling plate according to claim 1, wherein:
the at least one flow channel further comprises a second flow channel; and
in the case that the cooling plate is subjected to the external pressure, a shape of a cross section of the second flow channel is changed to keep a total volume of the at least one flow channel substantially unchanged.

5. The cooling plate according to claim 4, wherein:
the shape of the cross section of the second flow channel is circle; and
in the case that the cooling plate is subjected to the external pressure, the shape of the cross section of the second flow channel is changed from circle to non-circle.

6. The cooling plate according to claim 4, wherein a plurality of first flow channels and a plurality of second flow channels are provided and alternately arranged.

7. The cooling plate according to any one of claims 1 to 6, wherein the at least one flow channel comprises a plurality of flow channels, wherein two adjacent flow channels of the plurality of flow channels are spaced apart from each other.

8. The cooling plate according to claim 7, wherein:
a cavity is formed between the two adjacent flow channels; and/or
a part of the cooling plate located between the two adjacent flow channels is of a solid structure.

9. The cooling plate according to claim 2, wherein the first flow channel and/or the second flow channel have each a cross-section in a shape of polygon.

10. The cooling plate according to claim 9, wherein:
the cross section of the first flow channel is in a quadrilateral shape, and in the case that the cooling plate is subjected to the external pressure, a length difference between two adjacent sides of the quadrilateral shape is decreased; and/or
the cross section of the second flow channel is in a quadrilateral shape, and in the case that the cooling plate is subjected to the external pressure, a length difference between two adjacent sides of the quadrilateral shape is increased.

11. The cooling plate according to any one of claims 2, 9, or 10, comprising:
an outer frame; and
a plurality of partition plates disposed within the outer frame and arranged at intervals, wherein the plurality of flow channels are defined by the plurality of partition plates and the outer frame, wherein two adjacent flow channels of the plurality of flow channels are spaced apart from each other.

12. The cooling plate according to claim 11, wherein each of the plurality of partition plates is provided with a guide structure configured to guide a deformation of the partition plate, enabling the volume of the second flow channel to be decreased and the volume of the first flow channel to be increased.

13. The cooling plate according to claim 12, wherein the guide structure has at least one of:
a recess formed at the partition plate;
a bending structure disposed at the partition plate; or
a bevel edge disposed at the partition plate.

14. A battery pack, comprising:
the cooling plate according to any one of claims 1 to 13; and
a battery cell attached to the cooling plate.

15. The battery pack according to claim 14, wherein the battery cell is disposed at each of two opposite sides of the cooling plate.

16. An electric device, comprising the battery pack according to claim 14 or 15.
